# EUROPÄISCHE PATENTSCHRIFT

(11) **EP 0 555 303 B1**
(45) Veröffentlichungstag und Bekanntmachung des Hinweises auf die Patenterteilung: **27.04.1994**
(21) Anmeldenummer: 91918870.6
(22) Anmeldetag: 29.10.1991
(51) Int. Cl.: G07C 9/00

(54) **ZUGANGSKONTROLLVORRICHTUNG**
ACCESS CONTROL DEVICE
DISPOSITIF DE COMMANDE D'ACCES

(30) Priorität: 02.11.1990 DE 4034783
(43) Veröffentlichungstag der Anmeldung: 18.08.1993
(73) Patentinhaber: DODUCO GMBH + Co Dr. Eugen Dürrwächter, 75172 Pforzheim (DE)
(72) Erfinder: GROSS, Erwin, D-7500 Karlsruhe 1 (DE); NEY, Joachim, D-7532 Niefern 1 (DE); NORMANN, Norbert, D-7532 Niefern-Öschelbronn (DE); SCHULZE, Gunter, D-7536 Ispringen (DE)
(74) Vertreter: Twelmeier, Ulrich, Dipl.Phys.
(86) Internationale Anmeldenummer: EP9102037
(87) Internationale Veröffentlichungsnummer: WO9208211

(56) Entgegenhaltungen:
- EP-A- 0 329 931
- DE-A- 3 313 737
- US-A- 4 095 739
- US-A- 4 654 793
- US-A- 4 897 531
- IBM TECHNICAL DISCLOSURE BULLETIN, vol. 21, No. 1, June 1978, NEW YORK US, pages 330 - 331; POWELL: "Stand-alone Controled Access System" see page 331
- PROTECTOR June 1990, ZÜRICH SCHWEIZ pages 19 - 23; ADAMSKI: "Elemente der Zutrittskontrolle"

## Beschreibung

Die Erfindung geht aus von einer Zugangskontrollvorrichtung die eine Anzahl von maschinell lesbaren Datenträgern erster Art, auf denen Zugangsberechtigungen in codierter Form gespeichert sind, zur Ausgabe an zugangsberechtigte Personen, wenigstens ein Lesegerät für die ausgegebenen Datenträger erster Art, einen Rechner für die Prüfung der gelesenen Datenträger erster Art und die Freigabe des Zugangs, und eine Eingabevorrichtung zum Eingeben und Löschen von Zugangsberechtigungen in einen den Rechner zugeordneten Speicher umfaßt.

Eine derartige Zuganskontrollvorrichtung ist aus der DE-29 29 603 bekannt.

Das Dokument US-A-4 095 739 zeigt ebenfalls eine Zugangskontrollvorrichtung entsprechend dem Oberbegriff von Anspruch 1. Es beschreibt den Einsatz einer "supervisor card" um Zugangsberechtigungen für Personen mit einer "coded data card" festzulegen.

Zugangskontrollvorrichtungen sollen sicherstellen, dass lediglich ausgewählte Personen, denen eine Zugangsberechtigung erteilt ist, Zugang zu Gebäuden, Räumen, Maschinen, Konten und anderen Dingen erhalten. Zugangskontrollvorrichtungen enthalten zu diesem Zweck eine Anzahl von maschinell lesbaren Datenträgern, auf denen die Zugangsberechtigung in codierter Form, gespeichert ist. Es handelt sich dabei z.B. um Magnetstreifenkarten, Karten mit einem Streifencode, Karten mit einer Anordnung von magnetisch bistabilen Drähten (Wiegand-Drähte) oder ähnliches. Ferner gehört zur Zugangskontrollvorrichtung wenigstens ein Lesegerät an dem Objekt, welches nur für die ausgewählten Personen zugänglich sein soll. Dieses Lesegerät liest die auf dem Datenträger gespeicherte Information und übermittelt sie an einen Rechner, welcher sie daraufhin überprüft, ob der gelesene Datenträger einer zugangsberechtigten Person gehört. Zu diesem Zweck ist dem Rechner ein Speicher zugeordnet, in welchem alle erteilten Zugangsberechtigungen gespeichert sind, so dass der Rechner die gelesene Information des Datenträgers mit den gespeicherten Zugangsberechtigungen vergleichen kann. Stellt der Rechner fest, dass die gelesene Information mit einer der gespeicherten Zugangsberechtigungen übereinstimmt, gibt er den Zugang frei.

Die Zuverlässigkeit der Zugangskontrollvorrichtung hängt maßgeblich davon ab, dass die Eingabe von Zugangsberechtigungen in den Speicher und das Löschen von Zugangsberechtigungen im Speicher fehlerfrei erfolgen und nicht von jedermann durchgeführt werden können.

Es ist Stand der Technik, Zugangsberechtigungen über eine Tastatur in den Speicher einzugeben oder zu löschen. Nachteilig dabei ist, dass durch Vertippen Eingabefehler möglich sind und dass die Tastatur auch durch unbefugte Personen bedient werden kann, selbst wenn durch entsprechende Programmierung dafür gesorgt worden ist, dass nur durch Eingabe eines besonderen Paßwortes oder durch Verwendung eines Schlüssels (PIN) ein Zugriff zum Speicher möglich ist. Manipulationen können deshalb nicht ausgeschlossen werden.

Es ist auch bekannt, das Eingeben und das Löschen einer Zugangsberechtigung mit Hilfe des Datenträgers vorzunehmen, der für die zugangsberechtigte Person erstellt worden ist. Zusätzlich benötigt man dazu eine Tastatur, mit der man bestimmen kann, dass die mittels des Datenträgers eingegebene Information entweder gespeichert oder gelöscht werden soll. Nachteilig dabei ist, dass bei einem tatsächlich oder vorgetäuschten Verlust des Datenträgers die Zugangsberechtigung nur manuell über die Tastatur gelöscht werden kann, indem man eine Ordnungsnummer der zu löschenden Zugangsberechtigung eingibt, wozu man die Ordnungsnummer archivieren und in einer Cross-Referenzliste den zugangsberechtigten Personen zuordnen muss. Ein weiterer Nachteil liegt darin, dass auch hier Manipulationen möglich sind.

Der vorliegenden Erfindung liegt die Aufgabe zugrunde, eine Zugangskontrollvorrichtung der eingangs genannten Art so auszubilden, dass sie ohne eine Tastatur als Eingabegerät für einzugebende und zu löschende Zugangsberechtigungen auskommt, Fehleingaben weitgehend ausschließt und ein höheres Maß an Sicherheit vor unbefugten Manipulationen bietet.

Diese Aufgabe wird gelöst durch eine Zugangskontrollvorrichtung mit den im kennzeichnenden Teil des Anspruches 1 angegebenen Merkmalen. Vorteilhafte Weiterbildungen der Erfindung sind Gegenstand der abhängigen Ansprüche.

Erfindungsgemäss ist vorgesehen, für das Eingeben und Löschen von Zugangsberechtigungen einen gesonderten, maschinell lesbaren Datenträger zweiter Art einzusetzen, welcher ebenso wie der Datenträger erster Art, der an die zugangsberechtigte Person ausgegeben wird, die Zugangsberechtigung in codierter Form enthält. Dieser gesonderte Datenträger zweiter Art soll jedoch nicht einfach ein Duplikat des an die zugangsberechtigte Person ausgegebenen Datenträgers erster Art sein, sondern soll ein andersartiger Datenträger sein, der auch ein andersartiges Lesegerät benötigt. Dieser gesonderte Datenträger zweiter Art wird nicht an die zugangsberechtigte Person ausgegeben, sondern wird bei der für die Erteilung von Zugangsberechtigungen verantwortlichen Stelle archiviert und nur für die Eingabe der Zugangsberechtigungen oder für die Löschung der Zugangsberechtigung von der dafür verantwortlichen Person einem gesonderten Lesegerät zugeführt, welches nicht in der Lage ist, den ausgegebenen Datenträger erster Art zu lesen, so dass mit dem ausgegebenen Datenträger erster Art eine Manipulation der Zugangsberechtigung nicht möglich ist. Umgekehrt kann mit den archivierten Datenträgern zweiter Art kein Zugang erreicht werden, weil sie von dem für die Zugangskontrolle verwendeten Lesegerät nicht gelesen werden können. Die zu archivierenden Datenträger zweiter Art werden parallel zu den auszugebenden Datenträgern erster Art hergestellt und auf Fehlerfreiheit kontrolliert. Mit dem fehlerfreien Datenträger erreicht man beim Eingeben und Löschen von Zugangsberechtigungen eine extrem hohe Fehlersicherheit. Ein weiterer Vorteil der Erfindung besteht darin, dass durch die Notwendigkeit des Vorhandenseins der gesonderten, zu archivierenden Datenträger zweiter Art und eines gesonderten Lesegerätes auch eine sehr hohe Sicherheit gegen unbefugte Manipulationen an der Zugangskontrollanlage erreicht wird.

Wenn es sich beim auszugebenden Datenträger beispielsweise um eine Magnetkarte oder um eine Karte mit Wiegand-Drähten handelt, kann es sich bei den zu archivierenden Datenträgern zweiter Art beispielweise um Karten mit einem Streifencode handeln, der mit einem Streifencode-Lesestift optisch ausgelesen wird. Das Lesegerät für die archivierten Datenträger zweiter Art ist vorzugsweise nicht fest mit dem Rechner und dem ihm zugeordneten Speicher verbunden, sondern wird von einer dazu ermächtigten Person (z.B. ein Sicherheitsbeauftragter oder ein Hausmeister) bei Bedarf angeschlossen und im übrigen besonders verwahrt, so dass auch dadurch die Gefahr von unbefugten Manipulationen nochmals verringert wird.

Die Sicherheit vor unbefugten Manipulationen kann weiterhin dadurch erhöht werden, das man das Lesegerät für die archivierten Datenträger zweiter Art mit einer besonderen Kennung (Identitätscode) versieht, die vom Rechner überprüft wird, bevor mit diesem Lesegerät Eingaben gemacht werden können. Erkennt der Rechner die Kennung als richtig, läßt er Eingaben, die Zugangsberechtigungen erteilen oder löschen, zu. Erkennt er die Kennung nicht als richtig, akzeptiert er keine Eingaben von diesem Lesegerät. Dadurch läßt sich verhindern, dass unbefugte Personen mit einem Lesegerät, welches mit dem für die archivierten Datenträger zweiter Art vorgesehenen Lesegerät bauartgleich ist, für die gegebene Zugangskontrollvorrichtung aber nicht freigegeben ist, Zugriff zum Rechner erhalten.

Die archivierten Datenträger zweiter Art enthalten mindestens die codierte Zugangsberechtigung (Zugangscode). Ob der Zugangscode gespeichert oder gelöscht werden soll, könnte durch eine gesonderte Eingabe festgelegt werden. Vorzugsweise werden aber für jeden ausgegebenen Datenträger erster Art zwei Datenträger der zweiten Art archiviert, nämlich einer, der die codierte Zugangsberechtigung in Verbindung mit einer codierten Freigabeanweisung enthält, und ein anderer, der die codierte Zugangsberechtigung in Verbindung mit einer Löschanweisung enthält. Auf diese Weise muss die dazu autorisierte Person zum Löschen oder Eingeben eines Zugangscodes nichts anderes tun als die entsprechende archivierte Karte maschinell auszulesen.

Statt den Zugangscode mit Freigabeanweisung und den Zugangscode mit Löschanweisung auf getrennten archivierten Datenträgern zweiter Art vorzusehen, kann man ihn genauso vorteilhaft auf einem gemeinsamen Datenträger vorsehen, wenn die Freigabeanweisung und die Löschanweisung getrennt auslesbar sind. Dazu kann man die Anordnung auf dem Datenträger z.B. so treffen, dass die Freigabeanweisung gelesen wird, wenn der Datenträger in einer vorgegebenen Richtung am Lesegerät vorbeigeführt wird, und dass die Löschanweisung gelesen wird, wenn der Datenträger in der entgegengesetzten Richtung am Lesegerät entlangbewegt wird.

Vorzugsweise bildet man den archivierten Datenträger zweiter Art zugleich als Verwaltungsformular aus, auf welchem die zugangsberechtigte Person in Klarschrift identifiziert ist.

## Patentansprüche

1. Zugangskontrollvorrichtung, die
- eine Anzahl von maschinell lesbaren Datenträgern erster Art, auf denen Zugangsberechtigungen incodierter Form gespeichert sind, zur Ausgabe an zugangsberechtigte Personen,
- wenigstens ein Lesegerät für die ausgegebenen Datenträger erster Art,
- einen Rechner für die Prüfung der gelesenen Datenträger erster Art und die Freigabe des Zugangs, und
- eine Eingabevorrichtung zum Eingeben und Löschen von Zugangsberechtigungen in einem dem Rechner zugeordneten Speicher umfaßt,
**dadurch gekennzeichnet,**
- dass jedem der Datenträger erster Art mindestens ein Datenträger zweiter Art zugeordnet ist, über den die Zugangsberechtigungen in den Speicher eingebbar und löschbar sind, und
- dass die Datenträger zweiter Art vom Lesegerät für die Datenträger erster Art nicht lesbar sind, und für die Datenträger zweiter Art ein gesondertes, an den Rechner anschließbares Lesegerät vorgesehen ist.

2. Zugangskontrollvorrichtung nach Anspruch 1, **dadurch** **gekennzeichnet,** dass das Lesegerät für die Datenträger zweiter Art nicht ständig mit dem Rechner verbunden ist.

3. Zugangskontrollvorrichtung nach Anspruch 1 oder 2, **dadurch gekennzeichnet,** dass das Lesegerät für die Datenträger zweiter Art mit einer besonderen, vom Rechner erkennbaren, Kennung versehen ist, und dass der Rechner von diesem Lesegerät nur dann Eingaben annimmt, wenn er die Kennung als richtig erkannt hat.

4. Zugangskontrollvorrichtung nach Anspruch 1, 2 oder 3, **dadurch gekennzeichnet,** dass für jeden ausgegebenen Datenträger erster Art je zwei Datenträger zweiter Art vorhanden sind, von denen einer die codierte Zugangsberechtigung in Verbindung mit einer codierten Freigabeanweisung und der andere die codierte Zugangsberechtigung in Verbindung mit einer Löschanweisung enthält.

5. Zugangskontrollvorrichtung nach Anspruch 1, 2 oder 3, **dadurch gekennzeichnet,** dass für jeden Datenträger erster Art ein Datenträger zweiter Art vorhanden ist, der die codierte Zugangsberechtigung einmal in Verbindung mit einer codierten Freigabeanweisung und davon getrennt auslesbar ein weiteres Mal in Verbindung mit einer codierten Löschanweisung enthält.

6. Zugangskontrollvorrichtung nach einem der vorstehenden Ansprüche, **dadurch gekennzeichnet,** dass der Datenträger zweiter Art als Verwaltungsformular ausgebildet ist, der die zugangsberechtigte Person in Klarschrift identifiziert.

7. Zugangskontrollvorrichtung nach Anspruch 1, **dadurch** **gekennzeichnet,** dass die Datenträger erster Art vom Lesegerät für die Datenträger zweiter Art nicht lesbar sind.

## Claims

1. An access control device comprising
a number of machine-readable data carriers which are of a first kind and on which access authorizations are stored in coded form and which are issued to persons who are authorized to have access,
at least one reader for reading the issued data carriers of the first kind,
a computer for checking the read data carriers of the first kind and for permitting an access,
input means for entering and erasing access authorizations into and in a memory which is associated with the computer,
characterized in that
at least one data carrier of a second kind is associated with each of the data carriers of the first kind and can be used to enter the access authorizations into and to erase them in the memory, and
the data carriers of the second kind cannot be read by the reader for the data carriers of the first kind, and a separate reader, which is adapted to be connected to the computer, is provided for the data carriers of the second kind.

2. An access control device according to claim 1, characterized in that the reader for the data carriers of the second kind is not always connected to the computer.

3. An access control device according to claim 1 or 2, characterized in that the reader for the data carriers of the second kind is provided with a separate identification, which can be recognized by the reader,and that the computer accepts entries from said reader only when the computer has recognized the identification as being correct.

4. An access control device according to claim 1, 2 or 3, characterized in that two data carriers of the second kind are provided for each data carrier of the first kind which has been issued, namely, one data carrier which contains the coded access authorization together with a coded instruction to release and another data carrier which contains the coded access authorization together with an instruction to erase.

5. An access control device according to claim 1, 2 or 3, characterized in that one data carrier of the second kind is provided for each data carrier of the first kind and contains the coded access authorization together with a coded instruction to release and separately therefrom contains the coded access authorization together with a coded instruction to erase.

6. An access control device according to any of the preceding claims, characterized in that the data carrier of the second kind constitutes an administrative form, by which the person who is authorized to have access is identified in clear text.

7. An access control device according to claim 1, characterized in that the data carriers of the first kind cannot be read by the reader for the data carriers of the second kind.

## Revendications

1. Dispositif de commande d'accès comprenant un certain nombre de supports de données à lecture mécanique d'un premier type, sur lesquels des autorisations d'accès sont emmagasinées sous forme codée pour n'être délivrées qu'aux personnes autorisées à avoir accès, au moins un lecteur pour lire les supports à délivrance de données de ce premier type, un ordinateur pour traiter les supports à données lues et pour autoriser l'accès, des moyens d'entrée pour l'introduction ainsi que pour l'effacement des autorisations d'accès dans une mémoire associée à l'ordinateur, **caractérisé** en ce qu'au moins un support de données d'un second type est associé à chacun des supports de données du premier type et peut être utilisé pour introduire les autorisations d'accès dans la mémoire et les en effacer, et en ce que les supports de données du second type ne peuvent être lus par le lecteur destiné à lire les supports de données du premier type, un lecteur séparé, conçu pour être relié à l'ordinateur, étant destiné aux supports de données du second type.

2. Dispositif de commande d'accès selon la revendication 1, **caractérisé** en ce que le lecteur destiné aux supports de données du second type n'est pas relié en permanence à l'ordinateur.

3. Dispositif de commande d'accès selon l'une des revendications 1 ou 2, **caractérisé** en ce que le lecteur destiné aux supports de données du second type est pourvu d'une identification séparée, que le lecteur peut reconnaître, et en ce que l'ordinateur n'accepte d'entrées qui émanent dudit lecteur que si l'ordinateur s'est préalablement assuré que l'identification est correcte.

4. Dispositif de commande d'accès selon l'une des revendication 1, 2 ou 3, **caractérisé** en ce que deux supports de données du second type sont associés à chacun des supports de données du premier type à données lues, à savoir : un support de données contenant l'autorisation codée d'accès et une instruction codée de délivrance, ainsi qu'un support de données contenant l'autorisation codée d'accès et une instruction d'effacement.

5. Dispositif de commande d'accès selon l'une des revendications 1, 2 ou 3, **caractérisé** en ce qu'un support de données du second type est prévu pour chaque support de données du premier type et contient l'autorisation codée d'accès et une instruction codée de délivrance, ainsi que, séparément, l'autorisation codée d'accès et une instruction codée d'effacement.

6. Dispositif de commande d'accès selon l'une, quelconque, des revendications précédentes, **caractérisé** en ce que le support de données du second type constitue un formulaire administratif grâce auquel la personne autorisée à avoir accès peut être identifiée en clair.

7. Dispositif de commande d'accès selon la revendication 1, **caractérisé** en ce que les supports de données du premier type ne peuvent être lus au moyen du lecteur des supports de données du second type.
